# EUROPÄISCHE PATENTSCHRIFT

(11) **EP 2 808 278 B1**
(45) Veröffentlichungstag und Bekanntmachung des Hinweises auf die Patenterteilung: **20.07.2016**
(21) Anmeldenummer: 13002782.4
(22) Anmeldetag: 29.05.2013
(51) Int. Cl.: B65G 53/24, A24C 5/39, B65G 53/66

(54) **Verfahren zur Förderung von Tabak und entsprechendes Computerprogrammprodukt**
Method for transporting tobacco and corresponding computer programm product
Procédé de transport de tabac et produit programme ordinateur correspondant

(43) Veröffentlichungstag der Anmeldung: 03.12.2014
(73) Patentinhaber: Riedel Filtertechnik GmbH, 33818 Leopoldshöhe (DE)
(72) Erfinder: Kükenshöner, Udo, 33699 Bielefeld (DE)
(74) Vertreter: Schober, Mirko

(56) Entgegenhaltungen:
- WO-A1-2011/020132
- DE-A1- 10 332 869
- DE-A1- 19 943 504

## Beschreibung

Die Erfindung betrifft ein Verfahren zur Förderung von Tabak und ein entsprechendes Computerprogrammprodukt.

Tabak, insbesondere Schnitttabak, kann bei der Herstellung von Tabakprodukten, wie beispielsweise Zigaretten, in den verarbeitenden Werken pneumatisch gefördert werden. Bei der pneumatischen Förderung wird der Tabak in einem Luftstrom durch ein Rohr transportiert.

Ein Verfahren nach dem Oberbegriff des Anspruchs 1 ist aus DE 103 32 869 A1 bekannt.

Häufig kommen dabei sogenannte Saugförderanlagen zum Einsatz, bei denen der Luftstrom durch eine geeignete Fördereinrichtung durch das Rohrsystem gesaugt wird. In der Regel wird der im Luftstrom geförderte Materialstrom durch eine Abscheideeinrichtung aus dem Luftstrom entfernt bevor der Luftstrom die Fördereinrichtung erreicht.

Ein Nachteil dieser Fördermethode ist die mechanische Beanspruchung des Tabaks bei der Förderung. Diese führt zur Verschlechterung der Tabakqualität und ist daher sinnvollerweise auf einem möglichst niedrigen Wert zu halten. Aus der EP 1 840 055 B1 ist bereits bekannt, dass durch Messung der Geschwindigkeit des zu fördernden Gutes eine Einstellung von dessen Geschwindigkeit auf einen Wert erfolgen kann, bei der sich die Verschlechterung des Tabaks während des Transports in vertretbaren Grenzen hält.

Problematisch ist jedoch, dass bei Unterschreitung einer bestimmten Luftgeschwindigkeit, d.h. Geschwindig-keit des Luftstroms im Förderrohr, es zu Tabakablagerungen und damit zu Verstopfungen oder Verschlechterung der Förderleistung kommen kann. Daher müssen Regelungen derzeit so ausgelegt werden, dass die Sollwerte für die Luftstromgeschwindigkeit derart hoch gewählt werden, dass Betriebsstörungen aufgrund von Verstopfungen oder ähnlichen Ereignissen ausgeschlossen sind.

Das Risiko für das Auftreten einer Betriebsstörung hängt jedoch von einer Vielzahl von Faktoren ab, zu denen auch solche gehören, die sich im laufenden Betrieb ständig ändern, wie Dichte, Gewicht, Feuchte, Konsistenz, Faserlänge oder ähnliche Eigenschaften des Tabaks sowie prozesstechnische Parameter der Förderung, wie der Umgebungsluftdruck oder die Beladung des Luftstroms mit Tabak.

Daher muss nach dem Stand der Technik ein Wert für die Luftgeschwindigkeit gewählt werden, der im Rahmen des Schwankungsbereichs dieser Parameter Betriebsstörungen wirkungsvoll ausschließt. Naturgemäß liegt dieser Wert höher als der Wert, der erreichbar wäre, wenn zu jedem Zeitpunkt die optimale, d.h. die niedrigste mögliche Luftgeschwindigkeit gewählt würde. Eine Erfassung sämtlicher Einflussfaktoren hierfür ist jedoch aufgrund ihrer Vielzahl und ihrer komplexen Zusammenhänge, wenn es um die Abschätzung des Verstopfungsrisikos geht, nicht realisierbar.

Der Erfindung liegt daher die Aufgabe zugrunde, ein Verfahren zur Förderung von Tabak anzugeben, welches die Förderung von Tabak mit einer möglichst niedrigen Luftgeschwindigkeit ermöglicht.

Die Aufgabe wird gelöst durch ein Verfahren und ein Computerprogrammprodukt gemäß der unabhängigen Ansprüche.

Das erfindungsgemäße Verfahren beruht darauf, dass die Luftgeschwindigkeit im Förderrohr und/oder in einem Saugrohr gemessen wird. Die Kenntnis der tatsächlichen Luftgeschwindigkeit erlaubt es, diese exakt einzustellen. Mögliche Abweichungen der beabsichtigten Luftgeschwindigkeit von der tatsächlichen müssen dann nicht mehr wie im Stand der Technik dadurch kompensiert werden, dass die eingeregelte Luftgeschwindigkeit höher gewählt wird als notwendig, da nicht nur ein rechnerischer Sollwert für die Luftgeschwindigkeit geregelt wird, sondern die tatsächliche gemessene Luftgeschwindigkeit eingeregelt werden kann. Dies resultiert in der Möglichkeit, niedrigere Luftgeschwindigkeiten im Betriebsmittel zu realisieren.

Weiterhin ist es möglich, die Messwerte der Luftgeschwindigkeit weiterzuverarbeiten, beispielweise um die durch die Messung gewonnenen Daten über die Luftgeschwindigkeit zur Detektion von Betriebsstörungen zu nutzen.

Erfindungsgemäß werden zur Detektion von Betriebsstörungen des Förderbetriebs im Förderrohr die Parameter Luftgeschwindigkeit, Materialgeschwindigkeit und Druck gemessen und in Abhängigkeit voneinander ausgewertet.

Es hat sich gezeigt, dass sich Betriebsstörungen,'wie beispielsweise Rohrverstopfungen, durch charakteristische Veränderungen dieser drei Parameter ankündigen. Die gleichzeitige Überwachung dieser drei Parameter ermöglicht es, Betriebsstörungen und sich anbahnende Betriebsstörungen frühzeitig zu erkennen und geeignete Gegenmaßnahmen zu ergreifen. Dadurch können die Auswirkungen der Betriebsstörung auf die Gesamtproduktivität der Anlage soweit vermindert werden, dass es möglich ist, das erfindungsgemäße Verfahren zur Förderung von Tabak bei niedrigeren Luftgeschwindigkeiten durchzuführen als herkömmliche Verfahren dieser Art. Bei diesen können Gegenmaßnahmen gegen Betriebsstörungen nicht mehr so rechtzeitig ergriffen werden, dass der Vorteil der Schonung des Tabaks durch die niedrigere Luftgeschwindigkeit die Produktivitätseinbußen durch die notwendigen Gegenmaßnahmen bzw. das Auftreten der Betriebsstörungen selber überwiegt.

Vorzugsweise sieht das Verfahren vor, dass durch die Detektion eines kritischen Betriebszustands, also einer Betriebsstörung oder einer sich anbahnenden Betriebsstörung, die Luftgeschwindigkeit angehoben wird. Hierdurch wird zwar in Kauf genommen, dass die Belastung des Tabaks zunimmt, jedoch lässt sich in vielen Fällen der kritische Betriebszustand durch diese Maßnahme in einen unkritischen Betriebszustand überführen, wodurch das Auftreten einer schwerwiegenden Betriebsstörung, wie beispielsweise einer Verstopfung des Förderrohres verhindert werden kann.

Vorzugsweise sieht das Verfahren weiterhin vor, bei Detektion eines kritischen Betriebszustands, insbesondere dann, wenn der kritische Betriebszustand nach Anheben der Luftgeschwindigkeit weiter andauert, d.h. das Anheben der Luftgeschwindigkeit nicht zu dessen Beseitigung geführt hat, eine Regelklappe zur Regelung des Luftstroms mehrfach geöffnet und geschlossen wird.

Eine derartige Regelklappe, also eine Vorrichtung, die eine Veränderung des Leitungsquerschnitts und damit der Luftströmung ermöglicht, kann sich beispielsweise im Fall einer Saugförderanlage zwischen einer Abscheide-einrichtung, welche den Tabak zur weiteren Verarbeitung aus dem Förderluftstrom separiert, und der Fördereinrichtung, welche den Luftstrom erzeugt, befinden. Das mehrfache Öffnen und Schließen dieser Klappe erzeugt Druckstöße, also Schwankungen von Druck und Strömungsgeschwindigkeit des Luftstroms im Förderrohr, durch die Tabakablagerungen gelöst und auch bereits gebildete Verstopfungen aufgelöst werden können.

Vorzugsweise sieht das Verfahren weiterhin vor, dass bei Detektion eines kritischen Betriebszustands, insbesondere dann, wenn eine oder beide der vorangehend beschriebenen Maßnahmen erfolglos geblieben sind, die Leistung einer Luftfördereinrichtung gesteigert wird. Die Luftfördereinrichtung, bei der es sich beispielsweise um einen Ventilator handeln kann, erzeugt dann einen erhöhten Saugdruck, um die Verstopfung aufzulösen. Dabei ist es vorteilhaft, nach der Auflösung der Verstopfung die Leistung der Fördereinrichtung wieder auf das Niveau vor Einleitung dieser Maßnahme zu senken.

Gemäß einer vorteilhaften Weiterbildung werden Daten über detektierte kritische Betriebszustände gesammelt. Diese können beispielsweise in einer elektronischen oder computerbasierten Datenbank gespeichert werden und stehen so zur späteren Auswertung zur Verfügung.

Durch die gezielte Auswertung dieser Daten kann beispielsweise ermittelt werden, durch welche Veränderungen der Parameter Luftgeschwindigkeit, Materialgeschwindigkeit und Druck sich die jeweiligen kritischen Betriebszustände ankündigen, um so die Detektion der kritischen Betriebszustände selbst zu optimieren.

Darüber hinaus ist es weiterhin vorteilhaft, wenn auf Basis dieser gesammelten Daten eine automatische Anpassung des Sollwerts für die Luftgeschwindigkeit verwendet wird, d.h. dass beim Auftreten oder beim gehäuften Auftreten kritischer Betriebszustände automatisch eine Anhebung des Sollwerts, auf dem die Luftgeschwindigkeit im Förderrohr geregelt wird, erfolgt bzw. dass, wenn über längere Zeiträume keine oder nur eine geringe Zahl kritischer Betriebszustände detektiert wird, beispielsweise wenn die Anzahl detektierter kritischer Betriebszustände einen vorgegebenen Schwellwert unterschreitet, die Luftgeschwindigkeit automatisch abgesenkt wird.

Das erfindungsgemäße Verfahren kann dabei mit einer computerbasierten Steuerung durchgeführt werden, bei der die Verfahrensschritte und Parameter in Form eines Computerprogrammprodukts vorliegen, welches auf dem zur Steuerung des erfindungsgemäßen Verfahrens verwendeten Computer ausgeführt wird.

Vorzugsweise wird das erfindungsgemäße Verfahren dahingehend optimiert, dass der Sollwert, auf den die Luftgeschwindigkeit im Förderrohr geregelt wird, im Betrieb kontinuierlich abgesenkt wird, solange die relative Häufigkeit kritischer Betriebszustände einen ersten Schwellwert nicht überschreitet. Hierfür werden die kritischen Betriebszustände im Betrieb detektiert und nach ihrer relativen Häufigkeit ausgewertet, d.h. es wird ermittelt, wie oft in einem bestimmten Zeitintervall kritische Betriebszustände auftreten. Dabei ist es vorzugsweise auch möglich, unterschiedliche Typen kritischer Betriebszustände zu klassifizieren und nach ihrer Schwere zu gewichten.

Wird ein erster Schwellwert überschritten, so wird der Sollwert nicht weiter abgesenkt. Vorteilhafterweise kann der Sollwert angehoben werden, wenn ein zweiter Schwellwert überschritten wird. Die Absenkung oder Steigerung kann dabei inkrementell, d.h. stufenweise oder auch in Form von Rampen erfolgen, wobei auch progressive oder degressive Anhebungs- und Absenkungsmuster für den Sollwert denkbar sind.

Die Muster können beispielsweise dahingehend optimiert werden, dass bei Erreichen eines zweiten Schwellwerts zunächst nur eine leichte Anhebung erfolgt, wenn der zweite Schwellwert daraufhin nicht wieder unterschritten wird, stärkere Anhebungen des Sollwerts erfolgen. Eine derartige Optimierung wäre beispielsweise sinnvoll, wenn sich im Betrieb der Anlage zeigt, dass ein Betrieb unterhalb des zweiten Schwellwerts nach dessen Überschreitung regelmäßig bereits nach kleinen Korrekturen, d.h. leichter Anhebung des Sollwerts der Luftgeschwindigkeit erreicht werden können und nur in seltenen Fällen eine starke Anhebung des Sollwerts notwendig ist.

Die sinnvoll zu wählende Charakteristik ist dabei insbesondere von individuellen konstruktiven Merkmalen der jeweiligen Anlage abhängig, wie auch von Parametern wie Schwankung der Tabakqualität, welche für eine jeweilige Tabakproduktion individuell sind, d.h. es kann auch sein, dass eine umgekehrte Regelcharakteristik verglichen mit der vorangehend beschriebenen sinnvoll ist, d.h. dass es sich im Betrieb zeigt, dass bei Überschreiten des zweiten Schwellwerts zunächst eine starke Anhebung des Sollwerts sinnvoll ist, da dies im Regelfall für das Unterschreiten des zweiten Schwellwerts erforderlich ist. Dann ist es möglich, dass es sinnvoll ist, wenn sich an diese erste starke Erhöhung des Sollwerts bei anhaltendem Überschreiten des zweiten Schwellwerts Anhebungen des Sollwerts in entsprechend kleineren Schritten anschließen.

Es ist auch möglich, den ersten und den zweiten Schwellwert identisch zu wählen, d.h. unmittelbar nach der kontinuierlichen Senkung des Sollwerts der Luftgeschwindigkeit den Sollwert wieder anzuheben sobald ein Schwellwert überschritten wird, d.h. der erste und der zweite Schwellwert sind identisch.

Aufgrund der Tatsache, dass sich sinnvolle Werte für die beschriebenen Parameter Sollwert, erster und zweiter Schwellwert, Absenkungs- und Anhebungscharakteristik des Sollwerts für die jeweilige Anlage häufig erst im realen Betrieb finden lassen werden bzw. sich im realen Betrieb diese Parameter weiter optimieren lassen werden, ist es vorteilhaft, das Verfahren hinsichtlich dieser Steuer- und/oder Regelparameter selbstlernend zu gestalten. Hierdurch wird das Verfahren auch robust, beispielsweise gegen langfristige Schwankungen der Tabakqualität oder auch ähnliche sich im Laufe des Betriebs ändernde Umstände, da sich das Verfahren selbsttätig diesen Schwankungen anpassen kann.

So ist es insbesondere vorteilhaft, wenn die Absenkung des Sollwerts aufgrund gespeicherter Daten über kritische Betriebszustände optimiert wird. Dies bedeutet, dass die Daten über die kritischen Betriebszustände gespeichert und gesammelt werden, und dahingehend ausgewertet werden, dass die zeitabhängige Absenkungscharakteristik des Sollwerts dahingehend optimiert wird, dass im zeitlichen Mittel des Betriebes möglichst niedrige Sollwerte realisiert werden. So kann beispielsweise ein sich ergebender Erfahrungswert, dass unterhalb eines bestimmten Sollwerts mit einer erhöhten relativen Häufigkeit kritischer Betriebszustände zu rechnen ist, dahingehend verwendet werden, dass der Sollwert zunächst mit einer raschen Absenkung in die Nähe des Erfahrungswerts abgesenkt wird, um schnell eine möglichst niedrige Luftgeschwindigkeit zu realisieren. Im weiteren Verlauf des Betriebes wird die Absenkungsgeschwindigkeit des Sollwerts dann reduziert, um sich vorsichtig dem kritischen Bereich zu nähern.

Das gleiche gilt sinngemäß für die zeitabhängige Charakteristik der Anhebung des Sollwerts. Auch hier kann die Auswertung gespeicherter Daten über kritische Betriebszustände sinnvoll genutzt werden, um Erfahrungsberichte zu generieren, welche es dann ermöglichen, den Sollwert so schnell und so stark wie nötig aber auch gleichzeitig so schwach und/oder langsam wie möglich anzuheben.

Besonders vorteilhaft ist es dabei, wenn auch die Schwellwerte selbst in diesem Sinne an Erfahrungswerte aus der Auswertung gespeicherter Daten über kritische Betriebszustände angepasst werden, um den Schwellwert derart festlegen zu können, dass die beim Erreichen des Schwellwerts vorgesehenen Reaktionen im Fall des jeweiligen Schwellwerts erst so spät wie möglich jedoch so früh wie nötig erfolgen.

Dieses Steuerungsverfahren kann dabei grundsätzlich über eine konventionelle analoge elektronische oder elektromechanische Regelung erfolgen. Es ist aber gerade im Fall eines selbstlernenden Systems wegen der einfachen Integrierbarkeit einer Datenbank für die Daten über die kritischen Betriebszustände vorteilhaft, eine computerunterstützte Steuerung für die Realisierung des Verfahrens vorzusehen. Die einzelnen Verfahrensschritte können dann als Anweisungen in einem entsprechenden Computerprogrammprodukt gespeichert sein, welches auf einem mit einer entsprechenden Anlagensteuerung verbundenen Computer ausgeführt, geeignet und bestimmt ist, das erfindungsgemäße Verfahren durchzuführen.

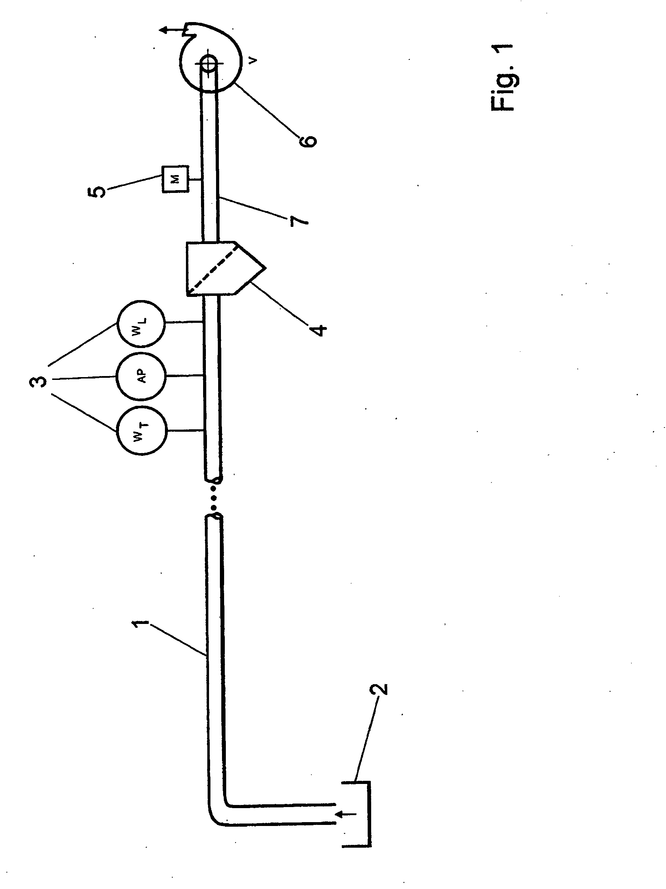

Die Figur 1 zeigt eine schematische Darstellung einer beispielhaften Saugförderanlage, auf der das erfindungsgemäße Verfahren durchführbar ist.

Figur 2 zeigt schematisch einen beispielhaften zeitabhängigen Verlauf des Sollwerts für die Luftgeschwindigkeit und der relativen Häufigkeit kritischer Betriebszustände während des Betriebs einer beispielhaften Anlage.

Die beispielhafte Anlage weist ein Förderrohr 1 auf, durch das Tabak in einem Luftstrom gefördert werden kann. Dabei wird der Tabak durch eine Beladungseinrichtung 2 in den Luftstrom eingebracht und durch eine Abscheideeinrichtung 4 dem Luftstrom wieder entnommen. Am Förderrohr 1 angeordnet befinden sich drei Messeinrichtungen 3, eine davon zur Messung der Luftgeschwindigkeit W_{L}, eine zur Messung der Geschwindigkeit der Tabakpartikel W_{T} sowie eine Einrichtung zur Messung des DruckesAP innerhalb des Förderrohres 1. Der Luftstrom im Förderrohr 1 wird aufgebaut durch eine Fördereinrichtung 6, welche durch das Saugrohr 7 mit der Abscheideeinrichtung 4 verbunden ist. Zur Steuerung der Luftgeschwindigkeit W_{L} im Förderrohr 1 ist eine Regelklappe 5 im Saugrohr 7 vorgesehen. Alternativ wären jedoch auch andere Möglichkeiten der Regelung der Luftgeschwindigkeit im Förderrohr 1 denkbar, wie beispielsweise eine direkte Steuerung der Leistung der Fördereinrichtung.

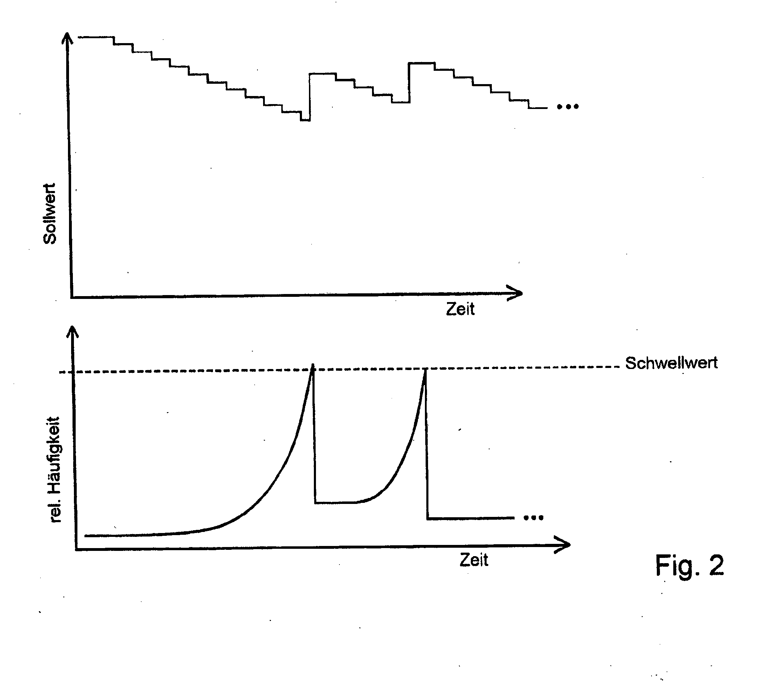

Während des Betriebs der beispielhaften Anlage werden die kritischen Betriebszustände erfasst und nach ihrer relativen Häufigkeit ausgewertet. Wie in Figur 2 dargestellt, wird der Sollwert für die Luftgeschwindigkeit kontinuierlich schrittweise abgesenkt, solange die relative Häufigkeit kritischer Betriebszustände unterhalb des vorgegebenen Schwellwerts liegt.

Wird dieser Schwellwert überschritten, so wird der Sollwert um einen definierten Betrag angehoben. Liegt nach dem Anheben des Sollwerts die relative Häufigkeit der kritischen Betriebszustände wieder unter dem Sollwert, so wird der Sollwert wieder kontinuierlich abgesenkt, bis die relative Häufigkeit der kritischen Betriebszustände wiederum den Schwellwert überschreitet, woraufhin der Sollwert wieder um einen definierten Betrag angehoben wird. Dieser Vorgang wiederholt sich dann zyklisch während des Betriebs der Anlage.

## Patentansprüche

1. Verfahren zur Förderung von Tabak, insbesondere mittels einer Saugförderanlage, wobei Tabak in einem Luftstrom durch ein Förderrohr (1) gefördert wird,
wobei die Luftgeschwindigkeit im Förderrohr (1) und/ oder im Saugrohr (7) gemessen wird,
**dadurch gekennzeichnet,**
**dass** zur Detektion von kritischen Betriebszuständen die Parameter Luftgeschwindigkeit, Materialgeschwindigkeit und Druck im Förderrohr (1) gemessen und in Abhängigkeit voneinander ausgewertet werden.

2. Verfahren nach Anspruch 1,
**dadurch gekennzeichnet,**
**dass** bei Detektion eines kritischen Betriebszustands die Luftgeschwindigkeit angehoben wird.

3. Verfahren nach einem der vorigen Ansprüche,
**dadurch gekennzeichnet,**
**dass** bei Detektion eines kritischen Betriebszustands, insbesondere wenn der kritische Betriebszustand nach Anheben der Luftgeschwindigkeit weiter andauert, eine Regelklappe (5) zur Regelung des Luftstroms mehrfach geöffnet und geschlossen wird.

4. Verfahren nach einem der vorigen Ansprüche,
**dadurch gekennzeichnet,**
**dass** bei Detektion eines kritischen Betriebszustands, insbesondere wenn der kritische Betriebszustand nach Anheben der Luftgeschwindigkeit und/oder nach mehrfachem Öffnen und Schließen der Regelklappe (5) weiter andauert, die Leistung einer Luftfördereinrichtung (6), insbesondere eines Ventilators, gesteigert wird.

5. Verfahren nach einem der vorigen Ansprüche,
**dadurch gekennzeichnet,**
**dass** Daten über detektierte kritische Betriebszustände gesammelt werden.

6. Verfahren nach einem der vorigen Ansprüche,
**dadurch gekennzeichnet,**
**dass** die Luftgeschwindigkeit im Förderrohr (1) auf einen Sollwert geregelt wird, wobei kritische Betriebszustände im Betrieb detektiert und nach ihrer relativen Häufigkeit ausgewertet werden, wobei der Sollwert kontinuierlich abgesenkt wird, solange die relative Häufigkeit der kritischen Betriebszustände einen ersten Schwellwert nicht überschreitet, wobei der Sollwert angehoben wird, wenn die relative Häufigkeit der kritischen Betriebszustände einen bestimmten zweiten Schwellwert überschreitet.

7. Verfahren nach Anspruch 6,
**dadurch gekennzeichnet,**
**dass** die kritischen Betriebszustände das Auftreten ungenügender Förderleistung umfassen.

8. Verfahren nach Anspruch 6 oder 7,
**dadurch gekennzeichnet,**
**dass** die kritischen Betriebszustände das Auftreten von Verstopfungen umfassen.

9. Verfahren nach einem der Ansprüche 6 bis 8,
**dadurch gekennzeichnet,**
**dass** der erste und der zweite Schwellwert identisch sind.

10. Verfahren nach einem der Ansprüche 6 bis 9,
**dadurch gekennzeichnet,**
**dass** die Absenkung des Sollwerts schrittweise erfolgt.

11. Verfahren nach Anspruch 10,
**dadurch gekennzeichnet,**
**dass** die Absenkung des Sollwerts aufgrund gespeicherter Daten über kritische Betriebszustände optimiert wird.

12. Verfahren nach Anspruch 10 oder 11,
**dadurch gekennzeichnet,**
**dass** eine automatische Anpassung der Schwellwerte aufgrund gespeicherter Daten über kritische Betriebszustände erfolgt.

13. Verfahren nach einem der Ansprüche 8 bis 12,
**dadurch gekennzeichnet,**
**dass** die Anhebung des Sollwerts aufgrund gespeicherter Daten über kritische Betriebszustände optimiert wird.

14. Computerprogrammprodukt mit gespeicherten Anweisungen zur Durchführung eines Verfahrens nach einem der vorigen Ansprüche, wenn es auf einem mit einer entsprechenden Anlagensteuerung verbundenen Computer ausgeführt ist.

## Claims

1. Method for conveying tobacco, in particular by means of a suction conveyer system, wherein tobacco is conveyed in an air flow through a conveyer pipe (1),
wherein the air speed is measured in the conveyer pipe (1) and / or in the suction pipe (7),
**characterised in that**
for the detection of critical operating states the parameters air speed, material speed and pressure are measured in the conveyer pipe (1) and evaluated in dependence upon each other.

2. Method according to claim 1,
**characterised in that**
the air speed is raised upon detection of a critical operating state.

3. Method according to one of the preceding claims,
**characterised in that**
upon detection of a critical operating state, in particular if the critical operating state further continues after raising the air speed, a regulating valve (5) is repeatedly opened and closed to regulate the air flow.

4. Method according to one of the preceding claims,
**characterised in that**
upon detection of a critical operating state, in particular if the critical operating state further continues after raising the air speed and / or after repeated opening and closing of the regulating valve (5), the power of an air conveying means (6), in particular a fan, is increased.

5. Method according to one of the preceding claims,
**characterised in that**
data are collected on detected critical operating states.

6. Method according to one of the preceding claims,
**characterised in that**
the air speed in the conveyer pipe (1) is regulated to a reference value, wherein critical operating states are detected during operation and evaluated according to their relative frequency, wherein the reference value is continuously lowered so long as the relative frequency of the critical operating states does not exceed a first threshold value, wherein the reference value is raised if the relative frequency of the critical operating states exceeds a determined second threshold value.

7. Method according to claim 6,
**characterised in that**
the critical operating states include insufficient conveying power arising.

8. Method according to claim 6 or 7,
**characterised in that**
the critical operating states include blockages arising.

9. Method according to one of claims 6 to 8,
**characterised in that**
the first and the second threshold value are identical.

10. Method according to one of claims 6 to 9,
**characterised in that**
the reference value is lowered in stages.

11. Method according to claim 10,
**characterised in that**
the lowering of the reference value is optimised on the basis of stored data on critical operating states.

12. Method according to claim 10 or 11,
**characterised in that**
an automatic adaptation of the threshold values takes place on the basis of stored data on critical operating states.

13. Method according to one of claims 8 to 12,
**characterised in that**
the raising of the reference value is optimised on the basis of stored data on critical operating states.

14. Computer program product with stored commands to carry out a method according to one of the preceding claims if it is executed on a computer connected to a corresponding system control.

## Revendications

1. Procédé de transport de tabac, en particulier au moyen d'une installation d'aspiration, sachant que le tabac est transporté dans un flux d'air, à travers un tube d'acheminement (1), la vitesse de l'air dans ledit tube d'acheminement (1) et / ou dans le tube d'aspiration (7) étant mesurée,
**caractérisé en ce que**,
pour la détection d'états de fonctionnement critiques, les paramètres de la vitesse de l'air, de la vitesse du produit et la pression sont mesurés dans le tube d'acheminement (1) et évalués en fonction les uns des autres.

2. Procédé selon la revendication 1,
**caractérisé en ce que**,
lors de la détection d'un état de fonctionnement critique, on élève la vitesse de l'air.

3. Procédé selon l'une des revendications précédentes,
**caractérisé en ce que**,
lors de la détection d'un état de fonctionnement critique, en particulier lorsque ledit état de fonctionnement critique se poursuit après que vitesse de l'air ait été élevée, un clapet de régulation (5), destiné à réguler le flux d'air, est ouvert et fermé à plusieurs reprises.

4. Procédé selon l'une des revendications précédentes,
**caractérisé en ce que**,
lors de la détection d'un état de fonctionnement critique, en particulier lorsque ledit état de fonctionnement critique se poursuit après l'élévation de la vitesse de l'air et / ou après l'ouverture et la fermeture réitérées du clapet de régulation (5), le rendement d'un dispositif d'acheminement d'air (6), en particulier d'un ventilateur, est augmenté.

5. Procédé selon l'une des revendications précédentes,
**caractérisé en ce que**
des données, relatives aux états de fonctionnement critiques détectés, sont collectées.

6. Procédé selon l'une des revendications précédentes,
**caractérisé en ce que**
la vitesse de l'air dans le tube d'acheminement (1) est réglée sur une valeur de consigne, sachant que des états de fonctionnement critiques sont détectés pendant le fonctionnement et évalués en fonction de leur fréquence relative, sachant que la valeur de consigne est continuellement abaissée tant que ladite fréquence relative des états de fonctionnement critiques ne dépasse pas vers le haut une première valeur de seuil, une élévation de la valeur de consigne étant effectuée lorsque la fréquence relative des états de fonctionnement critiques dépasse vers le haut une deuxième valeur de seuil déterminée.

7. Procédé selon la revendication 6,
**caractérisé en ce que**
les états de fonctionnement critiques comprennent l'apparition d'un rendement de transport insuffisant.

8. Procédé selon revendication 6 ou 7,
**caractérisé en ce que**
les états de fonctionnement critiques comprennent l'apparition d'engorgements.

9. Procédé selon l'une des revendications 6 à 8,
**caractérisé en ce que**
la première valeur de seuil et la deuxième valeur de seuil sont identiques.

10. Procédé selon l'une des revendications 6 à 9,
**caractérisé en ce que**
l'abaissement de la valeur de consigne est effectué pasà-pas.

11. Procédé selon la revendication 10,
**caractérisé en ce que**
l'abaissement de la valeur de consigne est optimalisé en raison de données mémorisées, relatives aux états de fonctionnement critiques.

12. Procédé selon revendication 10 ou 11,
**caractérisé en ce que**
les valeurs de seuil sont adaptées automatiquement en raison des données mémorisées, relatives aux états de fonctionnement critiques.

13. Procédé selon l'une des revendications 8 à 12,
**caractérisé en ce que**
l'élévation de la valeur de consigne est optimalisée en raison des données mémorisées, relatives aux états de fonctionnement critiques.

14. Produit de programme d'ordinateur avec des instructions mémorisées pour l'exécution d'un procédé selon l'une des revendications précédentes, lorsque celui-ci est exécuté sur un ordinateur relié à une commande d'installation conforme.
